# EUROPEAN PATENT APPLICATION

(11) **EP 4 592 017 A1**
(43) Date of publication of application: **30.07.2025**
(21) Application number: 25151427.9
(22) Date of filing: 13.01.2025
(51) Int. Cl.: B23K 26/14, B23K 26/362, B23K 101/34

(54) **LASER ABLATION SYSTEMS AND METHODS**

(30) Priority: 24.01.2024 US 202418421221
(71) Applicant: The Boeing Company, Arlington, VA 22202 (US)
(72) Inventor: CARDON, Lisa A., Arlington, 22202 (US); JOHNSON, Matthew C., Arlington, 22202 (US)
(74) Representative: Boult Wade Tennant LLP

(57) **Abstract**

Laser ablation systems (10) comprise a flow-directing structure (30) that comprises a body (32) that is configured to be operatively attached to a laser assembly (12) relative to purge-gas jet (20) and an optical assembly (18). The internal volume (34) and the outlet (38) of the flow-directing structure (30) are configured to direct high velocity air (22) away from an optic surface (24) of the laser assembly (12) and toward a substrate surface (16) being ablated by the laser ablation system (10). Laser ablation methods comprise emitting (102) a laser beam (14) through an optic surface (24) of an optical assembly (18) of a laser assembly (12), directing (104) high velocity purge gas (22) toward the optic surface (24), constraining (106) the purge gas (22) within a body (32) of a flow-directing structure (30) to create positive pressure inside the body (32), exhausting (108) a column of the purge gas (22) out of the body (32) toward the substrate surface (16), removing (110) a plasma plume (54) from a path of the laser beam (14), and dissipating (112) fumes (56) and effluent (58).

## Description

### FIELD

The present disclosure relates to laser ablation systems and methods.

### BACKGROUND

Laser ablation may be used as an industrial process to remove surface material, such as paint, coatings, contaminants, or oxidation. The laser ablation process results in particles, vapors, and gases (i.e., effluent) that interfere with the laser process and may contaminate the exposed optical surfaces of the laser ablation system. Effluent of contamination in the mean path negatively affects the laser process by scattering or absorbing laser energy. At high concentrations, absorbed energy on optical surface can generate enough heat to cause damage, requiring replacement of optics, which are expensive. Moreover, obtaining replacement optics for such highly specialized systems may take months, resulting in significant downtime of an industrial process. Historically, a thin slit aperture (known as an "air knife") may be used to protect laser optics by directing high pressure laminar gas flow parallel to the beam (immediately in front of the laser optic) to prevent back-spatter contamination. This technique can be effective at reducing back-spatter, but gas flowing across an open aperture can create a negative pressure (Venturi effect), pulling in unfiltered ambient air which can contaminate laser optics. Another technique is to mount a linear air knife immediately adjacent to the substrate surface to blow fumes and effluent out of the beam path during laser processing. This approach improves laser process performance but places cumbersome hardware close to the part surface, creating a crash hazard for automated manufacturing applications and risking part damage.

### SUMMARY

Laser ablation systems and methods are disclosed.

Laser ablation systems comprise a flow-directing structure that is configured to be operatively coupled to a laser assembly opposite an optical assembly of the laser assembly relative to a purge-gas jet that is positioned to direct high velocity purge gas across a optic surface of the optical assembly. The flow-directing structure comprises a body that is configured to be operatively attached to the laser assembly relative to the purge-gas jet and the optical assembly. The body defines a flow-directing-structure internal volume, an inlet to the flow-directing-structure internal volume, and an outlet from the flow-directing-structure internal volume. The inlet is configured to be positioned toward the optical assembly relative to the outlet. The flow-directing-structure internal volume and the outlet are configured to direct the high velocity purge gas away from the optic surface and toward a substrate surface being ablated by the laser ablation system.

Laser ablation methods comprise emitting a laser beam through an optic surface of an optical assembly of a laser assembly; directing high velocity purge gas at the optic surface; constraining the purge gas within a body of a flow-directing structure to create positive pressure inside the body; exhausting a column of the purge gas out of the body toward the substrate surface; removing a plasma plume from a path of the laser beam; and dissipating fumes and effluent.

### BRIEF DESCRIPTION OF THE DRAWINGS

Fig. 1 is schematic illustration representing exemplary laser ablation systems.
Fig. 2. Is an isometric view of an example laser ablation system.
Fig. 3 is an isometric view of an example mounting structure of a laser ablation system.
Fig. 4 is a cross-sectional view of the example mounting structure of Fig. 3.
Fig. 5 is an isometric view of an example flow-directing structure, an example purge-gas jet, and an example mounting structure.
Fig. 6 is an isometric view of the example flow-directing structure of Fig. 5.
Fig. 7 is another isometric of the example flow-directing structure of Fig. 5.
Fig. 8 is an isometric view of another example flow-directing structure.
Fig. 9 is another isometric view of the example flow-directing structure of Fig. 8.
Fig. 10 is an isometric view of another example flow-directing.
Fig. 11 is another isometric view of the example flow-directing structure of Fig. 10.
Fig. 12 is an isometric view of another example flow-directing structure.
Fig. 13 is another isometric view of the example flow-directing structure of Fig. 12.
Fig. 14 is a flow chart schematically representing exemplary laser ablation methods.

### DESCRIPTION

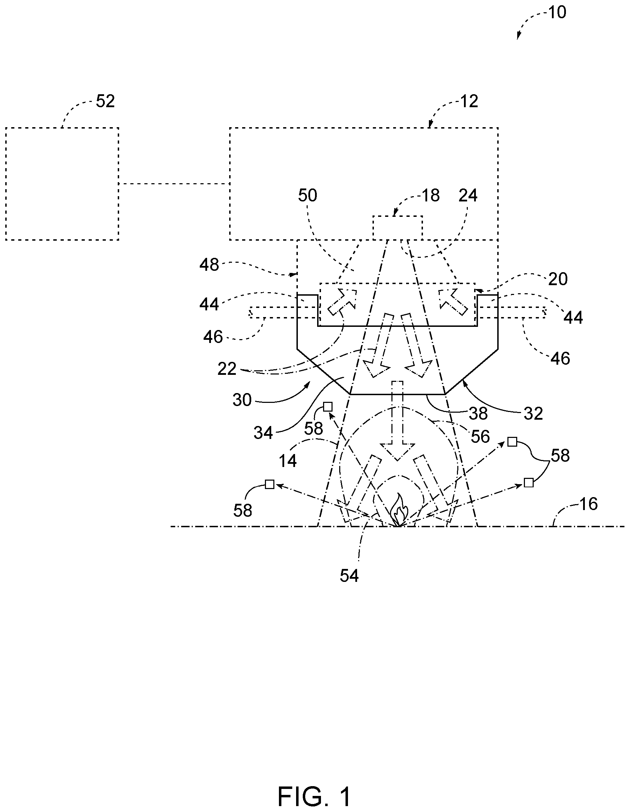

Fig. 1 schematically represents example laser ablation systems 10. Generally, in Fig. 1, elements that are likely to be included in a given example are illustrated in solid lines, while elements that are optional to a given example are illustrated in broken lines. However, elements that are illustrated in solid lines are not essential to all examples of the present disclosure, and an element shown in solid lines may be omitted from a particular example without departing from the scope of the present disclosure.

In some examples, as schematically represented in Fig. 1, laser ablation systems 10 typically comprise at least a flow-directing structure 30 that is configured to be operatively coupled to a laser assembly 12 opposite an optical assembly 18 of the laser assembly 12 relative to purge-gas jet 20 positioned to direct high velocity purge gas 22 across an optic surface 24 of the optical assembly 18. The flow-directing structure 30 comprises a body 32 that is configured to be operatively attached to the laser assembly 12 relative to the purge-gas jet 20 and the optical assembly 18.

In some examples, as schematically represented in Fig. 1, the body 32 defines a flow-directing-structure internal volume 34 and an outlet 38 from the flow-directing-structure internal volume 34. The outlet 38 is configured to be positioned opposite the optic surface 24. The flow-directing-structure internal volume 34 and the outlet 38 are configured to direct the high velocity purge gas 22 away from the optic surface 24 and toward a plasma plume 54 at the substrate surface 16 being ablated by the laser ablation system 10. Accordingly, the plasma plume 54 and associated fumes 56 and effluent 58 are removed from the path of the laser beam 14, thereby preventing scattering and absorption.

Accordingly, in some examples, when a flow-directing structure 30 is operatively installed and during use as schematically represented in Fig. 1, high velocity purge gas 22 directed at the optic surface 24 of the optical assembly 18 will be forced to exit the flow-directing structure 30 via the outlet 38 and directed against the substrate surface 16 being ablated. As a result, not only will the high velocity purge gas 22 serve to blow any undesirable effluent away from the optic surface 24, it also will create a region from the optic surface 24 to the substrate surface 16 in which the high velocity purge gas 22 restricts effluent from traveling toward and into contact with the optic surface 24. Moreover, the body 32 of the flow-directing structure 30 serves to shield the optic surface 24 from any effluent that may travel from the substrate surface 16 generally toward optic surface 24 even after being blown away from the substrate surface 16 by the high velocity purge gas 22, such as that otherwise becomes present and floating in the environment of a laser ablation system 10 during use.

Flow-directing structures 30 may be provided as add-ons for existing laser ablation systems. Alternatively, in some examples, laser ablation systems 10 may comprise a laser assembly 12, purge-gas jet 20 that is operatively coupled to the laser assembly 12, and a flow-directing structure 30 that is operatively coupled to the laser assembly 12 relative to the purge-gas jet 20. The outlet 38 from the flow-directing-structure internal volume 34 is positioned opposite the optic surface 24 of the optical assembly 18 of the laser assembly 12.

Flow-directing structures 30 may be constructed utilizing various manufacturing techniques, such as being machined or additively manufactured. In some examples, flow-directing structures 30 may be described as monolithic and/or consisting of a single piece. That is, in some examples, flow-direction structures 30 are not assemblies of multiple parts operatively coupled together.

In some examples of flow-directing structures 30, the flow-directing-structure internal volume 34 narrows toward the outlet 38. Accordingly, the flow-directing structure 30 may be described as a nozzle or as being configured to direct the high velocity purge gas 22 away from the optic surface 24 and toward the substrate surface 16. Such a configuration creates a clean positive pressure environment that prevents ingress of foreign particles and unfiltered ambient air in the laser beam 14 or on the optic surface 24.

The outlet 38 may take any suitable shape and size, such as depending on the desired characteristics of a laser ablation process. As examples, the outlet 38 may be circular, polygonal, rectangular, or an oblong slit; however, other shapes also may be utilized.

In some examples, the outlet 38 is shaped and sized to correspond to a perimeter of a laser beam 14 emitted by the laser assembly 12 through the optical assembly 18. In such examples, air-directing structure 30 may be described as providing the greatest possible constriction (or narrowest outlet 38) without the body 32 interfering with or otherwise blocking a portion, or a substantial portion, of the laser beam 14. That is, such a configured air-directing structure 30 will maximize the velocity of the air exiting the outlet 38 and being directed toward the substrate surface 16.

In some examples, such as the example of Fig. 1,, the body 32 of the flow-directing structure 30 defines one or more channels 44 that are configured to receive gas delivery ducts 46 of the purge-gas jet 20. In laser ablation systems 10 also comprising the purge-gas jet 20, the gas delivery ducts 46 of the purge-gas jet 20 extend through the one or more channels 44. In other words, air-directing structures 30 may be structured to accommodate the gas delivery ducts 46 of purge-gas jet 20. In some examples, flow-directing structures 30 define at least two channels 44, and in some examples define four channels 44. The channel(s) 44, when present may be open channel(s) 44, such that the body 32 does not extend fully around each channel 44, or the channel(s) 44 may be closed channel(s), such that the body 32 does extend fully each channel 44. Open channels may facilitate assembly of a flow-directing structure 30 with a purge-gas jet 20.

Similarly, purge-gas jets 20 may comprise one or more gas delivery ducts 46. However, a flow-directing structure 30 need not comprise the exact same number of channels 44 as the number of gas delivery ducts 46 of a corresponding purge-gas jet 20. For example, a flow-directing structure 30 may comprise four channels 44 for use with purge-gas jet 20 that has only two gas delivery ducts 46. In such examples, the air-delivery structure 30 may be able to be installed in two operative positions relative to the purge-gas jet 20, such as at 90° relative to each other. As a result, such air-directing structures 30 may be versatile and able to be utilized with various configurations of purge-gas jets 20.

Purge-gas jets 20 may take any suitable configuration, such that they are configured to operatively direct high velocity purge gas 22 at the optic surface 24 of an optical assembly 18 of a laser assembly 12. In some examples, purge-gas jets 20 may be described as or in the form of air knives. In some examples, purge-gas jets 20 may be described as or in the form of ring knives, ring air knives, circular air knives, and/or annular air knives, that is, air knives that are configured to deliver high velocity purge gas from a circular or other annular outlet. Such configurations of purge-gas jets 20 are well suited to ensure that an entirety of an optic surface 24 of an optical assembly 18 of a laser assembly 12 is fully impacted by the high velocity purge gas 22 for prevention of contact by undesirable effluent.

In some examples, the flow-directing structure 30 may be described as creating a collision barrier between the optical assembly 18 and the substrate surface 16 and/or as creating a low-profile crash protection system to avoid both equipment (e.g. laser) damage and part damage. In some examples, the flow-directing structure 30 may be fabricated from inexpensive lightweight material (e.g. ABS, Nylon, or similar) for use on cobots or small-payload machines. As a result, should damage occur to the flow-directing structure 30 as a result of a collision, it can be inexpensively replaced.

In some examples, the flow-directing structure 30 is sized to fit directly against the optical assembly 18 and partially block direct and specular laser emissions that otherwise would be potentially hazardous to personnel.

In some examples and as schematically represented in Fig. 1, some laser ablation systems 10 further comprise a mounting structure 48 that is configured to operatively couple the purge-gas jet 20 and the flow-directing structure 30 to the laser assembly 12 relative to the optical assembly 18. In fully assembled systems, the mounting structure 48 operatively couples the purge-gas jet 20 and the flow-directing structure 30 to the laser assembly 12 relative to the optical assembly 18. That is, when provided, the mounting structure 48 facilitates the operative positioning of the purge-gas jet 20 and the flow-directing structure 30 relative to the optical assembly 18 so that the flow-directing structure 30 will perform its intended function of directing the high velocity purge gas 22 toward the substrate surface 16 being ablated.

In some examples and as schematically represented in Fig. 1, the mounting structure 48 comprises a mounting-structure internal volume 50 that is contiguous with the flow-directing-structure internal volume 34 and that narrows toward the optic surface 24 when the mounting structure 48 is operatively coupled to the laser assembly 12. In other words, in some examples, the mounting structure 48 is configured to direct the high velocity purge gas 22 from the purge-gas jet 20 toward the optic surface 24, effectively maintaining a desirable velocity of air to ensure protection of the optic surface 24 from effluent.

In some examples, the mounting structure 48 is in direct contact with the optic surface 24, thereby avoiding any air gaps and/or specular reflection escapes.

In some examples, the flow-directing structure 30, the mounting structure 48, and the purge-gas jet 20 may be described as a three-piece enclosure that protects the optical assembly 18 with a single outlet 38 for the laser beam 14 and the high velocity purge gas 22.

In some examples and as schematically represented in Fig. 1, some laser ablation systems 10 further comprise a robotic manipulator 52 that is operatively coupled to the laser assembly 12 and that is configured to operatively position the laser assembly 12 for ablating the substrate surface 16. Various robotic manipulators 52 may be used, including robotic arms, articulated robots, so-called cobots (collaborative robots), delta robots, and other configurations of robots.

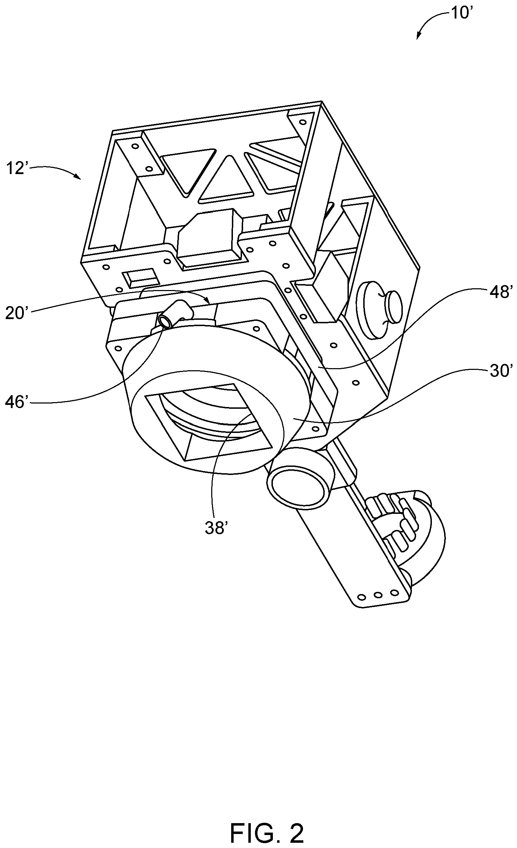

Turning now to Figs. 2-13, illustrative non-exclusive examples of laser ablation systems 10 and component parts thereof are illustrated. Where appropriate, the reference numerals from the schematic illustration of Fig. 1 are used with one or more prime symbols (`) to designate corresponding examples; however, the examples of Figs. 2-13 are non-exclusive and do not limit laser ablation systems 10 to the illustrated examples of Figs. 2-13. That is, laser ablation systems 10 may incorporate any number of the various features, configurations, characteristics, properties, etc. of laser ablation systems 10 that are illustrated in and discussed with reference to the schematic representations of Fig. 1 and/or the examples of Figs. 2-13, as well as variations thereof, without requiring the inclusion of all such features, configurations, characteristics, properties, etc. For the purpose of brevity, each previously discussed component, part, portion, feature, region, etc. or variants thereof may not be discussed, illustrated, and/or labeled again with respect to the examples of Figs. 2-13.

Fig. 2 illustrates an example laser ablation system 10' comprising a laser assembly 12', purge-gas jet 20', a flow-directing structure 30', and a mounting structure 48' that operatively couples the purge-gas jet 20' and the flow-directing structure 30' to the laser assembly 12'. The example air-directing structure 30' has a square outlet 38'.

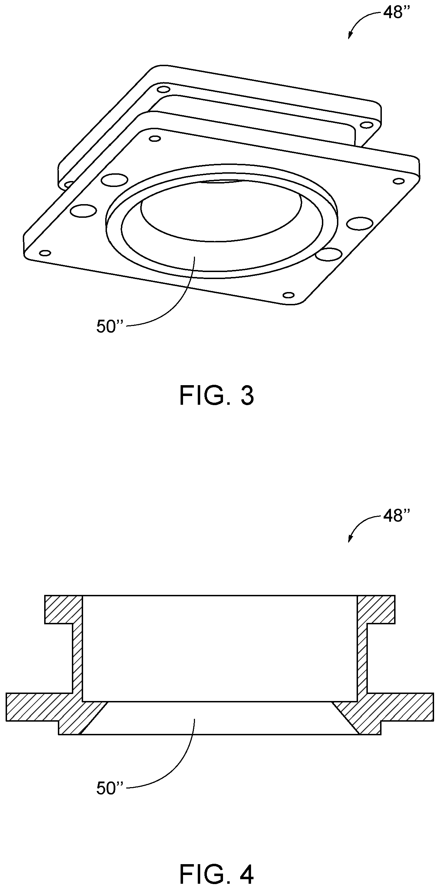

Figs. 3 and 4 illustrate an example mounting structure 48" comprises a mounting-structure internal volume 50" that narrows toward the optic surface of an optical assembly of a laser assembly when operatively installed relative thereto.

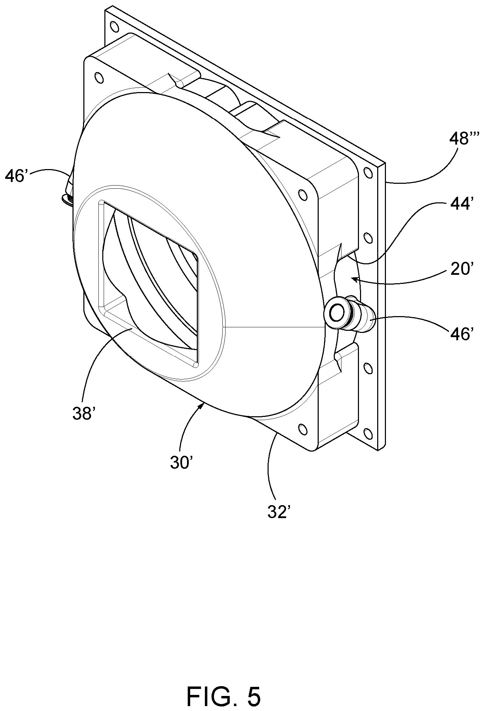

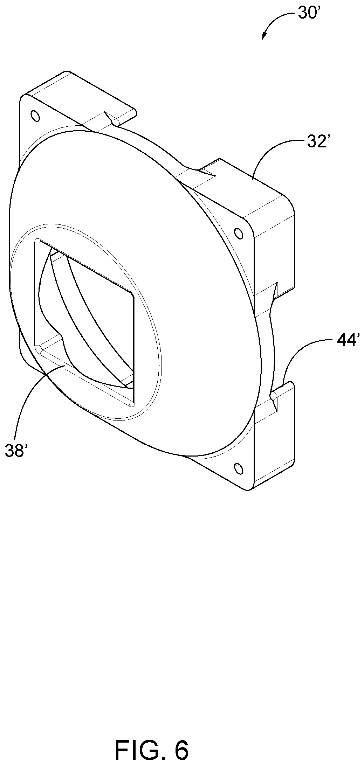

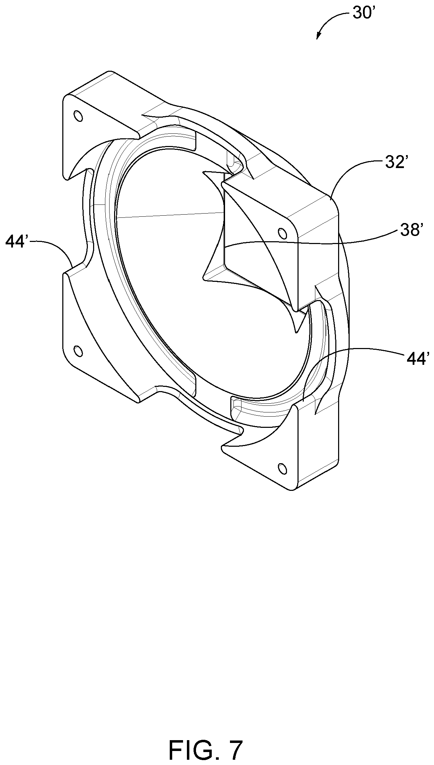

Fig. 5 illustrates the example air-directing structure 30' and the purge-gas jet 20' of the example laser ablation system 10' of Fig. 2, together with an example mounting structure 48'". Figs. 6 and 7 illustrate the flow-directing structure 30' by itself. The flow-directing structure 30' defines four channels 44', and the purge-gas jet 20' comprises two gas-delivery ducts 46' that extend through two of the channels 44' when the flow-directing structure 30; is operatively installed relative to the purge-gas jet 20', as illustrated in Fig. 5.

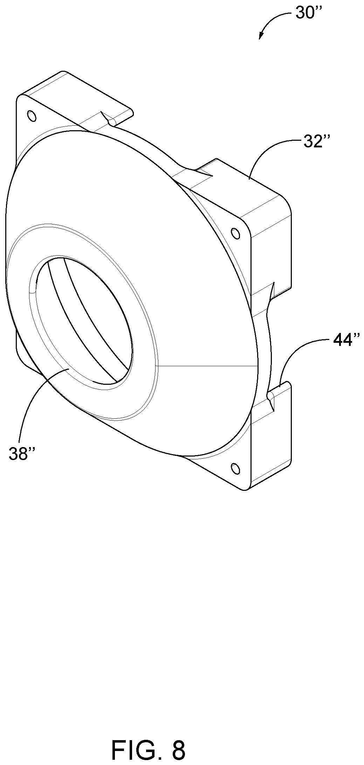

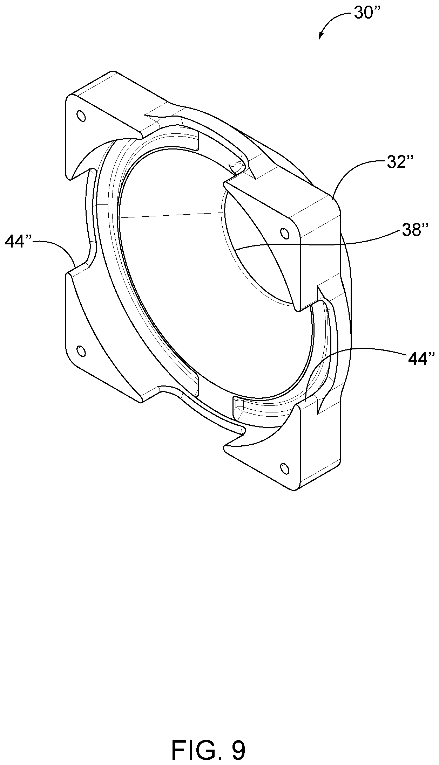

Figs. 8 and 9 illustrate an example flow-directing structure 30" with a circular outlet 38 " and with four channels 44".

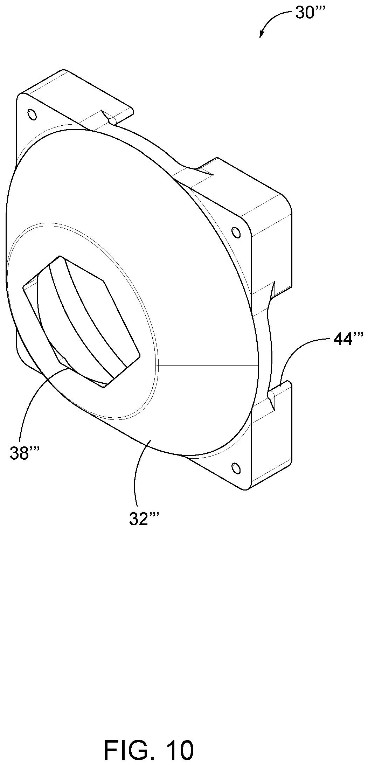

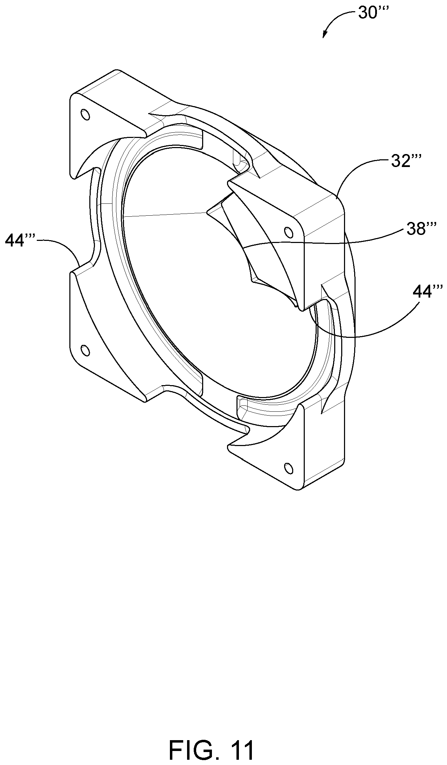

Figs. 10 and 11 illustrate an example flow-directing structure 30‴ with a hexagonal outlet 38‴ and with four channels 44'".

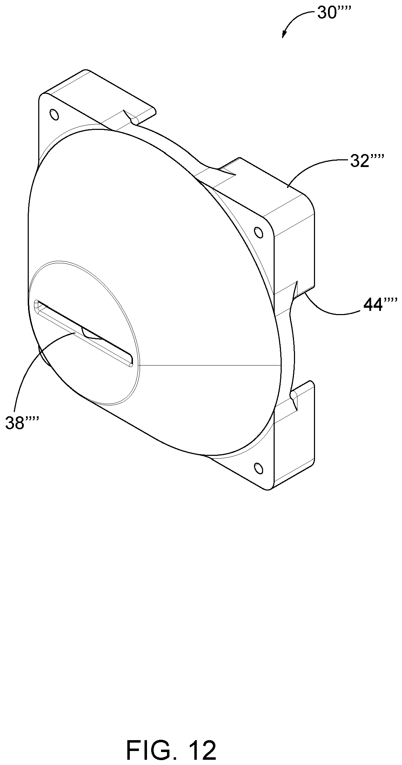

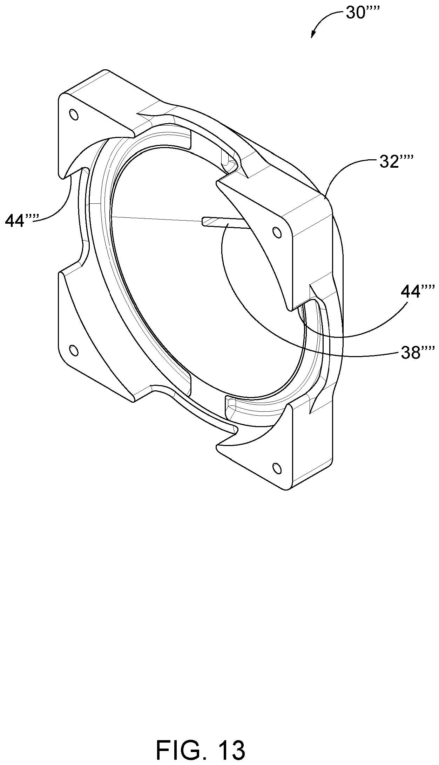

Figs. 12 and 13 illustrate an example flow-directing structure 30ʺʺ with an oblong slit 38ʺʺ.

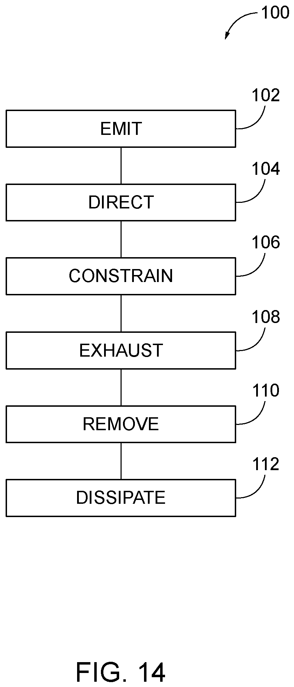

Fig. 14 schematically provides a flowchart that represents illustrative, non-exclusive examples of methods 100. The methods and steps illustrated in Fig. 14 are not limiting and other methods and steps are within the scope of the present disclosure, including methods having greater than or fewer than the number of steps illustrated, as understood from the discussions herein.

Methods 100 may be described as methods 100 for ablating a substrate surface 16. Methods 100 typically comprise at least emitting 102 a laser beam 14 through an optic surface 24 of an optical assembly 18 of a laser assembly 12; directing 104 high velocity purge gas 22 toward the optic surface 24; constraining 106 the purge gas 22 within a body 32 of a flow-directing structure 30 to create positive pressure inside the body 32; exhausting 108 a column of the purge gas 22 out of the body 32 toward the substrate surface 16; removing 110 a plasma plume 54 from a path of the laser beam 14; and dissipating 112 fumes 56 and effluent 58. Methods 100 may be performed by a laser ablation system 10.

The following clauses present further examples:
A. A laser ablation system (10), comprising: a flow-directing structure (30) configured to be operatively coupled to a laser assembly (12) opposite a optical assembly (18) of the laser assembly (12) relative to purge-gas jet (20) positioned to direct high velocity purge gas (22) across a optic surface (24) of the optical assembly (18), wherein the flow-directing structure (30) comprises: a body (32) configured to be operatively attached to the laser assembly (12) relative to the purge-gas jet (20) and the optical assembly (18), wherein the body (32) defines a flow-directing-structure internal volume (34) and an outlet (38) from the flow-directing-structure internal volume (34), wherein the outlet (38) is configured to be positioned opposite the optic surface of the optical assembly (18), and wherein the flow-directing-structure internal volume (34) and the outlet (38) are configured to direct the high velocity purge gas (22) away from the optic surface (24) and toward a substrate surface (16) being ablated by the laser ablation system (10).
A1. The laser ablation system (10) of paragraph A, wherein the flow-directing-structure internal volume (34) narrows toward the outlet (38).
A2. The laser ablation system (10) of any of paragraphs A-A1, wherein the outlet (38) is circular, polygonal, rectangular, or an oblong slit.
A3. The laser ablation system (10) of any of paragraphs A-A2, wherein the outlet (38) is sized to correspond to a perimeter of a laser beam (14) emitted by the laser assembly (12) through the optical assembly (18).
A4. The laser ablation system (10) of any of paragraphs A-A3, wherein the body (32) defines one or more channels (44) configured to receive gas delivery ducts (46) of the purge-gas jet (20).
A4.1. The laser ablation system (10) of paragraph A4, wherein the one or more channels (44) comprises at least two channels (44), optionally four channels (44).
A5. The laser ablation system (10) of any of paragraphs A-A4.1, further comprising: a mounting structure (48) configured to operatively couple the purge-gas jet (20) and the flow-directing structure (30) to the laser assembly (12) relative to the optical assembly (18).
A5.1. The laser ablation system (10) of paragraph A5, wherein the mounting structure (48) comprises a mounting-structure internal volume (50) that narrows toward the optic surface (24) when the mounting structure (48) is operatively coupled to the laser assembly (12).
A6. The laser ablation system (10) of any of paragraphs A-A5.1, further comprising: the purge-gas jet (20).
A7. The laser ablation system (10) of any of paragraphs A-A5.1, further comprising: the laser assembly (12); and the purge-gas jet (20).
A7.1. The laser ablation system (10) of paragraph A7, wherein the flow-directing structure (30) and the purge-gas jet (20) are operatively coupled to the laser assembly (12) to direct the high velocity purge gas (22) across the optic surface (24) and through the outlet (38) toward the substrate surface (16).
A7.2. The laser ablation system (10) of any of paragraphs A7-A7.1, further comprising: a/the mounting structure (48) configured to operatively couple the purge-gas jet (20) and the flow-directing structure (30) to the laser assembly (12) relative to the optical assembly (18).
A7.2.1.The laser ablation system (10) of paragraph A7.2, wherein the mounting structure (48) operatively couples the purge-gas jet (20) and the flow-directing structure (30) to the laser assembly (12).
B. A laser ablation system (10) for ablating a substrate surface (16), the laser ablation system (10) comprising: a laser assembly (12) comprising a optical assembly (18) comprising a optic surface (24); purge-gas jet (20) operatively coupled to the laser assembly (12) and configured to direct high velocity purge gas (22) across the optic surface (24) of the optical assembly (18); and a flow-directing structure (30) operatively coupled to the laser assembly (12) relative to the purge-gas jet (20), wherein the flow-directing structure (30) comprises a body (32) defining a flow-directing-structure internal volume (34), and an outlet (38) from the flow-directing-structure internal volume (34), wherein the outlet (38) is positioned opposite the optic surfacer (24) of the optical assembly (18), and wherein the flow-directing-structure internal volume (34) and the outlet (38) are configured to direct the high velocity purge gas (22) away from the optic surface (24) and toward the substrate surface (16).
B1. The laser ablation system (10) of paragraph B, wherein the flow-directing-structure internal volume (34) narrows toward the outlet (38).
B2. The laser ablation system (10) of any of paragraphs B-B1, wherein the outlet (38) is circular, polygonal, rectangular, or an oblong slit.
B3. The laser ablation system (10) of any of paragraphs B-B2, wherein the outlet (38) is sized to correspond to a perimeter of a laser beam (14) emitted by the laser assembly (12) through the optical assembly (18).
B4. The laser ablation system (10) of any of paragraphs B-B3, wherein the purge-gas jet (20) comprises one or more gas delivery ducts (46), and wherein the body (32) defines one or more channels (44) through which the one or more gas delivery ducts (46) extend.
B4.1. The laser ablation system (10) of paragraph B4, wherein the one or more gas delivery ducts (46) comprises at least two gas delivery ducts (46), optionally four gas delivery ducts (46), and wherein the one or more channels (44) comprises at least two channels (44), optionally four channels (44).
B5. The laser ablation system (10) of any of paragraphs B-B4.1, further comprising:
   a mounting structure (48) that operatively couples the purge-gas jet (20) and the flow-directing structure (30) to the laser assembly (12) relative to the optical assembly (18).
B5.1. The laser ablation system (10) of paragraph B5, wherein the mounting structure (48) comprises a mounting-structure internal volume (50) that narrows toward the optic surface (24).
B6. The laser ablation system (10) of any of paragraphs B-B5.1, further comprising:
   a robotic manipulator (52) operatively coupled to the laser assembly (12) and configured to operatively position the laser assembly (12) for ablating the substrate surface (16).
C. A method (100) for ablating a substrate surface (16), the method (100) comprising: emitting (102) a laser beam (14) through an optic surface (24) of an optical assembly (18) of a laser assembly (12); directing (104) high velocity purge gas (22) at the optic surface (24); constraining (106) the purge gas (22) within a body (32) of a flow-directing structure (30) to create positive pressure inside the body (32); exhausting (108) a column of the purge gas (22) out of the body (32) toward the substrate surface (16); removing (110) a plasma plume (54) from a path of the laser beam (14); and dissipating (112) fumes (56) and effluent (58).
C1. The method (100) of paragraph C, performed by the laser ablation system (10) of any of paragraphs B-B6.
D. The use of the laser ablation system of any of paragraphs A-A7.2.1 or B-B6 to ablate a substrate surface.

As used herein, the terms "adapted" and "configured" mean that the element, component, or other subject matter is designed and/or intended to perform a given function. Thus, the use of the terms "adapted" and "configured" should not be construed to mean that a given element, component, or other subject matter is simply "capable of" performing a given function but that the element, component, and/or other subject matter is specifically selected, created, implemented, utilized, programmed, and/or designed for the purpose of performing the function. It is also within the scope of the present disclosure that elements, components, and/or other recited subject matter that is recited as being adapted to perform a particular function may additionally or alternatively be described as being configured to perform that function, and vice versa. Similarly, subject matter that is recited as being configured to perform a particular function may additionally or alternatively be described as being operative to perform that function.

As used herein, the term "and/or" placed between a first entity and a second entity means one of (1) the first entity, (2) the second entity, and (3) the first entity and the second entity. Multiple entries listed with "and/or" should be construed in the same manner, i.e., "one or more" of the entities so conjoined. Other entities optionally may be present other than the entities specifically identified by the "and/or" clause, whether related or unrelated to those entities specifically identified. Thus, as a non-limiting example, a reference to "A and/or B," when used in conjunction with open-ended language such as "comprising," may refer, in one example, to A only (optionally including entities other than B); in another example, to B only (optionally including entities other than A); in yet another example, to both A and B (optionally including other entities). These entities may refer to elements, actions, structures, steps, operations, values, and the like.

The various disclosed elements of apparatuses and steps of methods disclosed herein are not required to all apparatuses and methods according to the present disclosure, and the present disclosure includes all novel and non-obvious combinations and subcombinations of the various elements and steps disclosed herein. Moreover, one or more of the various elements and steps disclosed herein may define independent inventive subject matter that is separate and apart from the whole of a disclosed apparatus or method. Accordingly, such inventive subject matter is not required to be associated with the specific apparatuses and methods that are expressly disclosed herein, and such inventive subject matter may find utility in apparatuses and/or methods that are not expressly disclosed herein.

## Claims

1. A laser ablation system (10) for ablating a substrate surface (16), the laser ablation system (10) comprising:
a laser assembly (12) comprising an optical assembly (18) comprising an optic surface (24);
a purge-gas jet (20) operatively coupled to the laser assembly (12) and configured to direct purge gas (22) across the optic surface (24) of the optical assembly (18); and
a flow-directing structure (30) operatively coupled to the laser assembly (12) relative to the purge-gas jet (20), wherein the flow-directing structure (30) comprises a body (32) defining a flow-directing-structure internal volume (34), and an outlet (38) from the flow-directing-structure internal volume (34), wherein the outlet (38) is positioned opposite the optic surface (24) of the optical assembly (18), and wherein the flow-directing-structure internal volume (34) and the outlet (38) are configured to direct the purge gas (22) away from the optic surface (24) and toward the substrate surface (16).

2. The laser ablation system (10) of claim 1, wherein the flow-directing-structure internal volume (34) narrows toward the outlet (38).

3. The laser ablation system (10) of claim 1 or claim 2, wherein the outlet (38) is circular, polygonal, rectangular, or an oblong slit.

4. The laser ablation system (10) of any preceding claim, wherein the outlet (38) is sized to correspond to a perimeter of a laser beam (14) emitted by the laser assembly (12) through the optical assembly (18).

5. The laser ablation system (10) of any preceding claim, wherein the purge-gas jet (20) comprises one or more gas delivery ducts (46), and wherein the body (32) defines one or more channels (44) through which the one or more gas delivery ducts (46) extend.

6. The laser ablation system (10) of claim 5, wherein the one or more gas delivery ducts (46) comprises at least two gas delivery ducts (46), and wherein the one or more channels (44) comprises at least two channels (44).

7. The laser ablation system (10) of any preceding claim, further comprising:
a mounting structure (48) that operatively couples the purge-gas jet (20) and the flow-directing structure (30) to the laser assembly (12) relative to the optical assembly (18).

8. The laser ablation system (10) of claim 7, wherein the mounting structure (48) comprises a mounting-structure internal volume (50) that narrows toward the optic surface (24).

9. The laser ablation system (10) of any preceding claim, further comprising:
a robotic manipulator (52) operatively coupled to the laser assembly (12) and configured to operatively position the laser assembly (12) for ablating the substrate surface (16).

10. The laser ablation system (10) of any preceding claim, wherein the purge gas is a high velocity purge gas.

11. The laser ablation system (10) of any of claims 5 - 10, wherein the one or more channels (44) are open channels such that the body (32) does not extend fully around each of the one or more channels (44).

12. The laser ablation system (10) of claim 7 or claim 8, wherein the mounting structure (48) is in direct contact with the optic surface (24).

13. The laser ablation system (10) of any preceding claim, wherein the purge-gas jet (20) is one of: a ring knife, a ring air knife, a circular air knife, or an annular air knife.

14. A method (100) for ablating a substrate surface (16), the method (100) comprising:
emitting (102) a laser beam (14) through an optic surface (24) of an optical assembly (18) of a laser assembly (12);
directing (104) purge gas (22) at the optic surface (24);
constraining (106) the purge gas (22) within a body (32) of a flow-directing structure (30) to create positive pressure inside the body (32);
exhausting (108) a column of the purge gas (22) out of the body (32) toward the substrate surface (16);
removing (110) a plasma plume (54) from a path of the laser beam (14); and
dissipating (112) fumes (56) and effluent (58).

15. The method of claim 14, wherein directing (104) purge gas (22) at the optic surface (24) comprises directing (104) high velocity purge gas (22) at the optic surface (24).
